# DEMANDE DE BREVET EUROPEEN

(11) **EP 1 854 706 A1**
(43) Date de publication de la demande: **14.11.2007**
(21) Numéro de dépôt: 07108153.3
(22) Date de dépôt: 14.05.2007
(51) Int. Cl.: B62D 25/16, B62D 29/04, F16B 5/06

(54) **Fixation glissante d'une aile à une caisse en blanc de véhicule automobile et procédé de fixation utilisant une telle fixation**

(30) Priorité: 12.05.2006 FR 0604258
(71) Demandeur: COMPAGNIE PLASTIC OMNIUM, 69007 Lyon (FR)
(72) Inventeur: Andre, Gerald, 01500, AMBERIEU EN BUGEY (FR); Fayt, Arnold, 01640, JUJURIEUX (FR); Cheron, Hugues, 01800, MEXIMIEUX (FR)
(74) Mandataire: Remy, Vincent Noel Paul

(57) **Abrégé**

La présente invention concerne une fixation glissante d'une aile (12) en matière plastique à une caisse en blanc (14) de véhicule automobile, une ouverture (20) étant ménagée dans l'aile pour recevoir un organe (18) solidaire de la caisse en blanc (14), l'ouverture (20) étant dimensionnée de façon à ménager une course de déplacement de l'organe (18) dans l'ouverture (20) selon une direction donnée

La fixation comprend en outre un moyen réglable (16) de limitation de la course de déplacement de l'organe (18) dans l'ouverture (20)

## Description

La présente invention concerne une fixation glissante d'une aile de véhicule automobile à une caisse en blanc et un procédé de fixation utilisant une telle fixation.

On sait que l'aile avant d'un véhicule se dilate principalement dans la direction longitudinale du véhicule en raison des échauffements de l'aile durant les différents étapes de traitements de celle-ci, lors de la construction du véhicule ou des variations de température extérieure lors de l'utilisation du véhicule. Cette dilatation est généralement prise en compte au niveau de la fixation avant de l'aile.

L'arrière d'une aile avant doit être fixé dans une position prédéterminée de sorte que l'arrière de l'aile et la portière avant se joignent précisément, tandis qu'en général, l'avant de l'aile est conçu pour pouvoir se déplacer vers l'avant sans dégradation de l'esthétique du véhicule.

La dilatation de l'aile n'engendre alors pas de déformation de cette pièce mais uniquement un glissement de celle-ci vers l'avant.

On connaît déjà une fixation glissante apte à lier une aile en matière plastique à une caisse en blanc d'un véhicule, utilisée en général durant les étapes de traitement, notamment de peinture de l'aile. L'aile comprend alors une ouverture oblongue de direction longitudinale parallèle à la direction longitudinale du véhicule automobile. La fixation comprend une entretoise logée dans l'ouverture et un organe de fixation, par exemple une vis, qui traverse l'entretoise et pénètre dans un orifice de fixation de la caisse en blanc.

L'entretoise est agencée pour que la vis, serrée sur l'entretoise, ne pince pas l'aile. Celle-ci est donc libre de se déplacer légèrement selon la direction longitudinale de son ouverture oblongue, relativement à l'organe de fixation et donc à la caisse en blanc, ce qui permet le glissement vers l'avant de l'aile, si celle-ci se dilate.

En d'autres termes, l'organe de fixation glisse sur une course de déplacement donnée dans l'ouverture de l'aile, lors de la dilatation de cette dernière.

On sait que la fabrication des ailes et des caisses en blanc souffre d'une assez grande dispersion géométrique entre pièces.

Or, cette dispersion géométrique et, par conséquent, les défauts d'alignement possibles entre l'ouverture de l'aile et l'orifice de fixation correspondant de la caisse en blanc, ne sont pas négligeables devant la variation de longueur de l'aile due à sa dilatation thermique.

Ainsi, au montage, la position de l'ouverture de l'aile relativement à l'organe de fixation est très variable.

C'est pourquoi l'ouverture oblongue de l'aile prend également en compte, dans sa direction longitudinale, les dispersions de dimensions des ailes et des caisses en blanc dans leurs longueurs.

De ce fait, cette ouverture oblongue est dimensionnée bien plus grande que la course de déplacement de l'organe de fixation. Le contrôle précis de la course de l'organe avec ce type de fixation n'est donc pas possible.

Or, sur certaines ailes, l'avant a une forme particulière qui n'autorise pas que l'aile se déplace vers l'avant sans dégradation notable de l'esthétique du véhicule.

La course de déplacement de l'organe dans l'ouverture de l'aile doit alors être très limitée. C'est par exemple le cas d'une aile englobant le bloc optique et affleurant avec son vitrage. Une dilatation non contrôlée de l'aile n'est dans ce cas pas tolérée car elle pourrait engendrer une dégradation d'aspect visible de l'avant du véhicule automobile autour du bloc optique.

La solution actuelle consiste à bloquer totalement une aile de ce type, en la fixant à l'aide d'une fixation classique du type vis-écrou, une telle aile étant traitée hors de la ligne de montage principale et ne subissant donc pas de traitements engendrant des échauffements importants alors qu'elle est déjà reliée à la caisse.

Toutefois, cette solution n'est pas satisfaisante. En effet, la longueur de l'aile augmente tout de même du fait de sa dilatation due aux variations climatiques. Il en résulte une déformation de l'aile qui gonfle vers l'extérieur. Cela dégrade considérablement l'aspect de l'avant du véhicule et crée en outre d'importantes contraintes sur les fixations, qui doivent donc être dimensionnées pour être très rigides.

L'invention a pour but de remédier à ces inconvénients.

A cet effet, l'invention a pour objet une fixation glissante d'une aile en matière plastique à une caisse en blanc de véhicule automobile, une ouverture étant ménagée dans l'aile pour recevoir un organe solidaire de la caisse en blanc, l'ouverture étant dimensionnée de façon à ménager une course de déplacement de l'organe dans l'ouverture selon une direction donnée, la fixation étant caractérisée en ce qu'elle comprend un moyen réglable de limitation de la course de déplacement de l'organe dans l'ouverture.

Grâce à l'invention, la course de l'organe solidaire de la caisse en blanc dans la direction donnée ne dépend pas des dimensions de l'ouverture de l'aile. Cela permet de contrôler la dilatation de l'aile en s'affranchissant du problème de la dispersion des dimensions de l'aile.

En outre, la fixation glissante selon l'invention permet de fixer une aile à une caisse en blanc à l'aide d'une fixation ne possédant pas de propriétés mécaniques particulières, ce qui permet d'économiser des coûts de fabrication et de simplifier la conception du véhicule.

De plus, la fixation selon l'invention permet de répartir la déformation due à la dilatation de l'aile entre la partie avant de l'aile, en affleurement avec le bloc optique, et la partie intermédiaire de celle-ci, qui gonfle. Ainsi, l'aspect de l'avant du véhicule automobile n'est pas dégradé de façon visible.

Avantageusement, le moyen réglable de limitation est apte à se solidariser à l'aile en une quelconque d'une pluralité de positions de solidarisation possibles.

Le moyen de limitation, lors du montage de la fixation glissante, est donc apte à se solidariser à l'aile de véhicule automobile dans une position relativement à l'organe qui est presque toujours la même, quelle que soit la position initiale de l'organe dans l'ouverture de l'aile.

Ainsi, la fixation glissante selon l'invention permet d'assurer, pour tous les véhicules automobiles, un déplacement équivalent de l'aile relativement à la caisse à laquelle elle est fixée, lors de sa dilatation.

Selon un mode de réalisation particulier, les positions de solidarisation sont déterminées par des crans disposés régulièrement sur au moins une surface du moyen de limitation, ces crans étant destinés à coopérer avec des crans complémentaires disposés sur une surface de l'aile, au voisinage de l'ouverture de celle-ci.

Ainsi, les crans du moyen de limitation se positionnent, au montage de la fixation, entre les crans de l'aile, qui s'étendent perpendiculairement à la direction de la course de déplacement de l'organe. Le moyen de limitation peut ainsi être solidarisé relativement à l'aile en plusieurs positions bien définies et peu éloignées les unes des autres.

Selon un autre mode de réalisation, le moyen de limitation comprend au moins une dent métallique disposée sur une surface de ce moyen, la dent étant destinée à se planter dans l'aile.

Ainsi, le moyen de limitation peut se positionner dans une position quelconque sur l'aile. En outre, il n'est pas nécessaire de modifier la conception de l'aile pour y incorporer des moyens spécifiques pour la solidarisation à l'aile du moyen de limitation, celui-ci étant apte à se fixer dans une position adéquate uniquement à l'aide des moyens qu'il porte.

Optionnellement, l'organe solidaire de la caisse en blanc est un organe de fixation comprenant une tête de fixation et destiné à pénétrer dans un orifice de fixation de la caisse en blanc.

De façon optionnelle, le moyen de limitation est une pièce de limitation comportant une lumière dimensionnée de façon à accueillir l'organe.

Avantageusement, la fixation comprend des moyens d'entretoisement de la tête de fixation et de la pièce de limitation, destinés à maintenir la tête de fixation et la pièce de limitation à une distance prédéterminée l'une de l'autre selon une direction normale au plan de l'orifice de fixation.

Dans un mode de réalisation particulier, les moyens d'entretoisement de la tête de fixation et de la pièce de limitation comprennent un épaulement porté par l'organe de fixation, destiné à coopérer par butée avec une surface de la caisse en blanc.

Dans un autre mode de réalisation, les moyens d'entretoisement de la tête de fixation et de la pièce de limitation comprennent un fût destiné à être logé dans la lumière de la pièce de limitation et à être traversé par l'organe de fixation.

Avantageusement, le fût est dimensionné pour que l'organe puisse se positionner en plusieurs positions dans ce fût.

Cela permet d'ajuster au mieux la position de la fixation glissante relativement au capot.

Dans ce mode de réalisation, le fût est apte à coulisser relativement à la pièce de limitation et comprend au moins rebord coopérant par butée avec un rebord de la lumière de la pièce de limitation.

Dans une variante de l'invention, la lumière de la pièce de limitation est de dimension inférieure, dans sa direction transversale, à la dimension maximale de la section de l'organe et comprend un élargissement local selon cette direction, destiné à accueillir l'organe.

Ainsi, au montage de la fixation, le positionnement de l'organe par rapport à la pièce de limitation est simple à effectuer puisque cet organe peut uniquement être introduit dans la pièce de limitation par l'élargissement local de la lumière de celui-ci.

En outre, dans ce cas, le réglage de la pièce de limitation relativement à l'aile correspond au réglage de la position de l'organe relativement à la caisse en blanc, qui est simple à mettre en oeuvre.

De façon optionnelle, la course de déplacement de l'organe est inférieure à 3 mm, de préférence 2 mm.

L'invention a également pour objet un procédé de fixation d'une aile à une caisse de véhicule automobile à l'aide d'une fixation glissante telle que définie ci-dessus, le procédé étant caractérisé en ce qu'il comprend :
- une étape de réglage du moyen de limitation ;
- une étape de solidarisation du moyen de limitation à l'aile.

L'invention sera mieux comprise à la lecture de la description qui va suivre, donnée uniquement à titre d'exemple et ne pouvant en aucun cas être considérée comme limitative de l'invention.

Cette description se réfère aux dessins dans lesquels :

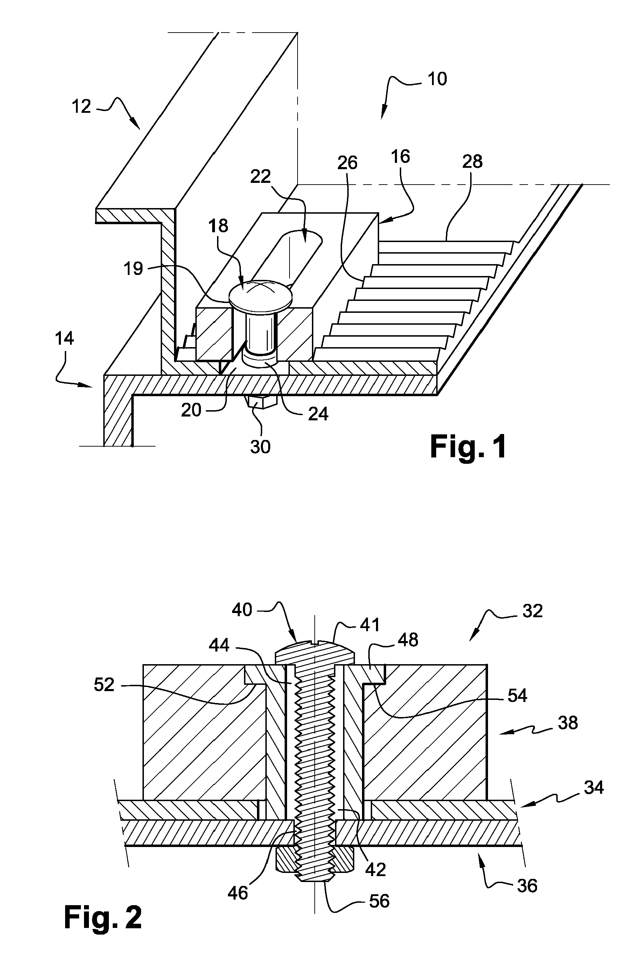

- la figure 1 est une vue en perspective de la fixation glissante selon un premier mode de réalisation de l'invention,
- la figure 2 est une vue en coupe de la fixation selon un second mode de réalisation de l'invention, selon un plan médian de l'orifice de fixation, normal à la direction donnée de la course de déplacement de l'organe.
- les figures 3a, 3b et 3c sont des vues de dessus de la fixation selon le second mode de réalisation de l'invention, représentée dans différents états de la dilatation de l'aile,
- la figure 4 est une vue de dessus de la pièce de limitation selon une variante du premier mode de réalisation de l'invention.

### Description d'un premier mode de réalisation:

### Vocabulaire :

| Des revendications | De l'exemple | Référence sur les dessins |
|---|---|---|
| Fixation glissante | Fixation glissante | 10 |
| Aile | Aile | 12 |
| Caisse en blanc | Caisse en blanc | 14 |
| Moyen de limitation | Pièce de limitation | 16 |
| Organe de fixation | Vis | 18 |
| Tête de fixation | Tête de vis | 19 |
| Ouverture de l'aile | Ouverture de l'aile | 20 |
| Lumière de la pièce de limitation | Lumière de la pièce de limitation | 22 |
| Moyens d'entretoisement | Epaulement de la vis | 24 |
| Crans | Crans | 26 |
| Crans complémentaires | Crans complémentaire de l'aile | 28 |
| | Ecrou | 30 |

### Détail de cet exemple :

La fixation 10 est destinée à fixer de façon glissante l'aile 12 et la caisse en blanc 14 à l'aide de la vis 18. Pour cela, l'aile 12 comporte une ouverture oblongue 20, permettant à la vis 18 de se déplacer sur une course de déplacement dans l'ouverture 20, selon la direction longitudinale de celle-ci. La direction longitudinale de l'ouverture 20 correspond également à la direction longitudinale du véhicule automobile, une fois la fixation 10 montée sur le véhicule.

La fixation 10 comprend un moyen de limitation constitué dans cet exemple par une pièce de limitation 16, comportant une lumière 22 oblongue dimensionnée pour accueillir la vis 18. La pièce de limitation 16 est agencée sur l'aile 12 de sorte que la lumière 22 soit superposée à l'ouverture 20 et que la direction longitudinale de la lumière 22 corresponde à la direction longitudinale de l'ouverture 20.

La dimension de la lumière 22 dans sa direction longitudinale est inférieure à la dimension de l'ouverture 20 de l'aile dans cette direction. Cette lumière 22 est en effet dimensionnée de façon à limiter la course de déplacement de l'organe à une course prédéterminée, inférieure à 3 mm, voire à 2 mm.

La pièce de limitation 16 est apte à se solidariser à l'aile 12 en une quelconque d'une pluralité de positions. A cet effet, des crans 26 réguliers s'étendent sur une surface de la pièce de limitation 16, agencés perpendiculairement à la direction longitudinale de la lumière 22. Ces crans 26 coopèrent avec des crans complémentaires 28 s'étendant sur l'aile perpendiculairement à la direction longitudinale de l'ouverture 20, un cran 26 quelconque étant apte à se placer entre deux quelconques crans 28 contigus.

Ce positionnement réglable de la pièce 16 permet de placer la vis 18 dans une position presque identique dans la lumière 22, par exemple au centre de celle-ci, sur tous les véhicules automobiles.

La pièce de limitation 16 et l'aile 12 sont fixées à la caisse en blanc 14 à l'aide de la vis 18 comportant une tête de vis 19. Cette vis 18 s'engage dans un orifice de fixation (non représenté) de la caisse en blanc 14 et coopère avec l'écrou 30 pour être solidaire de la caisse en blanc 14. La tête de vis 19 permet de maintenir la fixation 10 en place en serrant la pièce 16.

Cette vis 18 comprend un épaulement 24 coopérant par butée avec une surface de la caisse 14 et constituant des moyens d'entretoisement de la pièce 16 et de la tête 19 selon une direction perpendiculaire au plan de l'orifice de fixation (correspondant à la direction verticale du véhicule). Cet épaulement 24 limite le serrage de la pièce 16 par la tête 19. Il permet donc le glissement de la vis 18 dans la lumière 22 si la pièce 16 exerce sur cette vis 18 une contrainte de direction majoritairement parallèle à la direction longitudinale de la lumière 22 et de module supérieure à une valeur de seuil, ce qui se produit dans le cas de la dilatation de l'aile 12.

### Description d'un second mode de réalisation:

### Vocabulaire :

| Des revendications | De l'exemple | Référence sur les dessins |
|---|---|---|
| Fixation glissante | Fixation glissante | 32 |
| Aile | Aile | 34 |
| Caisse en blanc | Caisse en blanc | 36 |
| Moyen de limitation | Pièce de limitation | 38 |
| Organe de fixation | Vis | 40 |
| Tête de fixation | Tête de vis | 41 |
| Ouverture de l'aile | Ouverture de l'aile | 42 |
| Lumière de la pièce de limitation | Lumière de la pièce de limitation | 44 |
| Orifice de fixation | Orifice de fixation | 46 |
| Moyens d'entretoisement | Fût | 48 |
| Rebord du fût | Rebord du fût | 52 |
| Rebord de la lumière de la pièce de limitation | Rebord de la lumière de la pièce de limitation | 54 |
| | Ecrou | 56 |

### Détails de l'exemple :

Dans ce deuxième mode de réalisation de l'invention, les moyens d'entretoisement sont constitués par un fût 48, traversé par la vis 40 et logé dans la lumière 44. Le bord supérieur de ce fût 48 constitue un appui pour la tête de vis 41. De ce fait, le fût 48 est serré par la tête de vis 41 et est solidaire de la vis 40 et de la caisse en blanc 36.

Ce fût 48 est en outre apte à coulisser dans la lumière 44 selon la direction longitudinale de celle-ci. Il comprend à cet effet un rebord périphérique 52, coopérant par butée avec le rebord intérieur 54 de la lumière 44. Le fût 48 et, par conséquent, la vis 40 glissent donc dans la lumière 44 lorsque la pièce 38 exerce une contrainte importante sur le fût 48, selon la direction longitudinale de la lumière 44,.

Le fût 48 est également dimensionné de façon que la vis 40 puisse prendre plusieurs positions dans celui-ci, selon la direction perpendiculaire à la direction de la course de déplacement de celle-ci, c'est-à-dire selon la direction transversale du véhicule automobile, une fois la fixation 32 montée sur le véhicule automobile.

Le fût 48 est donc de section oblongue et est agencé dans la lumière 44 pour que sa direction longitudinale soit perpendiculaire à la direction longitudinale de la lumière 44. Cela permet de régler la position de la fixation 32 relativement au capot.

### Explications complémentaires :

Cette fixation 10, 32 permet de gérer la dilatation d'une aile selon une direction donnée, notamment selon la direction longitudinale de l'ouverture de l'aile 20, 42, correspondant à la direction longitudinale du véhicule automobile.

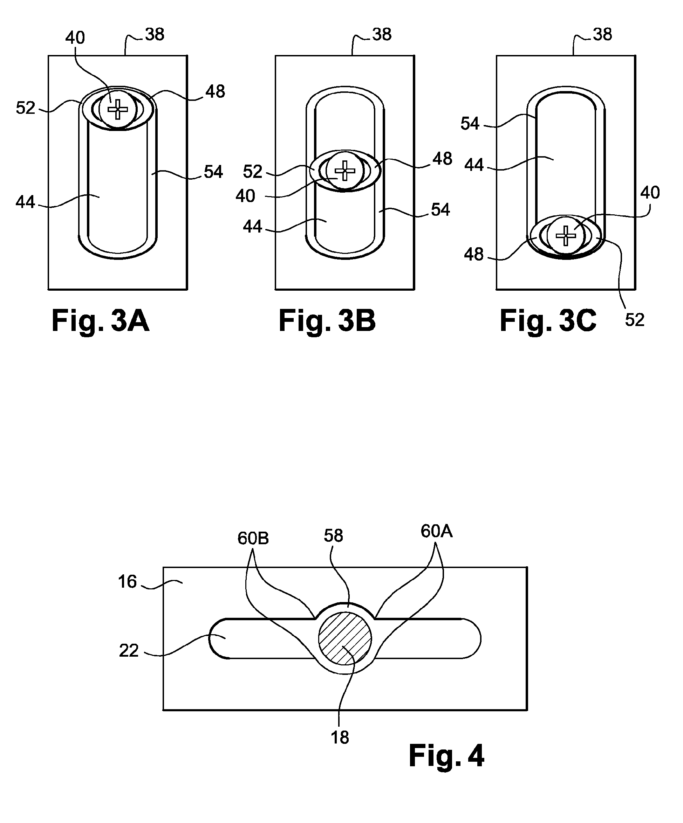

On observe notamment sur les figures 3a, 3b et 3c un exemple de différentes positions que peut prendre l'organe 40 dans la pièce de la limitation 38, lorsque l'aile se dilate.

### Variantes :

Comme cela est représenté à la figure 4, la dimension de la lumière de la pièce de limitation selon la direction transversale peut être légèrement inférieure au diamètre du corps de vis 18. Dans ce cas, la lumière 22 de la pièce 16 comporte un élargissement local 58 selon sa direction transversale, destiné à accueillir la vis 18.

Cet élargissement permet d'effectuer un positionnement rapide de la vis 18 dans la pièce 16, et , par conséquent, un positionnement rapide de la pièce 16 par rapport à l'écrou 30 (et donc par rapport à la caisse en blanc 14 et à l'aile 12).

Lorsque l'aile 12 se dilate, les contraintes exercées sur la vis 18 par la pièce 16 sont si importantes que la vis 18 franchit les points durs 60A, 60B et coulisse avec frottements dans la pièce 16.

Cette variante peut naturellement être adaptée si l'on remplace la vis 18 par la vis 40 et le fût 48.

Dans une autre variante non représentée, la pièce de limitation peut comporter, sur une surface destinée à être en contact avec l'aile, une dent qui se plante dans l'aile. Dans ce cas, l'aile ne comporte pas de crans 28.

L'organe peut également ne pas avoir de fonction de fixation. Il peut par exemple simplement être constitué par un doigt d'un seul tenant avec la caisse en blanc.

Le moyen de limitation peut en outre être constitué en deux parties, se fixant de part et d'autre de l'ouverture de l'aile dans la direction donnée, notamment la direction longitudinale de l'ouverture, ce qui permet de régler facilement la course de déplacement de l'organe avec une fixation standard.

### Description du procédé selon l'invention :

Le procédé de fixation d'une aile 12, 34 de véhicule automobile selon l'invention comporte une première étape de positionnement de l'aile 12, 34 sur la caisse en blanc 14, 36 du véhicule automobile. Cette étape est suivie d'une étape de fixation de l'arrière de l'aile 12, 34 de sorte que celle-ci et la portière avant du véhicule automobile soient réglées précisément en jeu et en affleurement. Un glissement de l'arrière de l'aile 12, 34 n'est en effet pas permis pour assurer l'ouverture de la portière avant.

Chaque ouverture 20, 42 de l'aile 12, 34 se trouve alors superposée à un orifice de fixation 46 correspondant de la caisse en blanc 14, 36.

Le procédé comporte alors, pour chaque ouverture de l'aile, une étape de réglage d'un moyen de limitation 16, 38 mis en place de sorte qu'il soit superposé à l'ouverture 20, 42 de l'aile 12, 34.

Cette étape permet de régler de la position du moyen de limitation 16, 38, de sorte que ce moyen soit positionné dans une configuration choisie vis-à-vis d'un orifice de fixation 46. Cette configuration doit permettre de fixer une course de déplacement dans une direction donnée d'un organe 18, 40 agencé par la suite dans l'ouverture 20.

Le procédé comprend ensuite une étape de solidarisation de la pièce de limitation 16, 38 et de l'aile 12, 34.

Cette étape comprend, dans un mode de réalisation particulier, une étape de serrage de l'organe 18, 40, par exemple une vis, sur le moyen de limitation 16, 38.

Il est bien entendu que le procédé décrit n'est pas limitatif et que l'invention peut être encore mise en oeuvre différemment.

En variante, dans le cas où la fixation est selon la variante représentée à la figure 4, le procédé comporte une étape de mise en place de l'organe 18 dans l'élargissement 58 du moyen de limitation 16, puis une étape d'alignement de l'organe 18 sur la caisse en blanc, constituant également l'étape de réglage du moyen de limitation 16. Cette étape est suivie de l'étape de solidarisation du moyen de limitation 16 à l'aile, étape de solidarisation qui est réalisée par l'étape de vissage de l'organe 18 à la caisse en blanc.

Le procédé peut également comporter des étapes supplémentaires d'entretoisement de l'organe de fixation 18, 40 et du moyen de limitation 16, 38 et/ou de réglage de la position de la fixation 10, 32 dans une direction perpendiculaire à la direction donnée.

## Revendications

1. Fixation glissante d'une aile (12 ; 34) en matière plastique à une caisse en blanc (14 ; 36) de véhicule automobile, une ouverture (20 ; 42) étant ménagée dans l'aile pour recevoir un organe (18 ; 40) solidaire de la caisse en blanc (14 ; 36), l'ouverture (20 ; 42) étant dimensionnée de façon à ménager une course de déplacement de l'organe (18 ; 40) dans l'ouverture (20 ; 42) selon une direction donnée, la fixation (10 ; 32) étant **caractérisée en ce qu'**elle comprend un moyen réglable (16 ; 38) de limitation de la course de déplacement de l'organe (18 ; 40) dans l'ouverture (20 ; 42).

2. Fixation selon la revendication 1, dans laquelle le moyen réglable de limitation (16 ; 38) est apte à se solidariser à l'aile (12 ; 34) en une quelconque d'une pluralité de positions de solidarisation possibles.

3. Fixation selon la revendication 2, dans laquelle les positions de solidarisation sont déterminées par des crans (26) disposés régulièrement sur au moins une surface du moyen de limitation (16), ces crans (26) étant destinés à coopérer avec des crans complémentaires (28) disposés sur une surface de l'aile (12), au voisinage de l'ouverture (20) de celle-ci.

4. Fixation selon la revendication 2, dans laquelle le moyen de limitation comprend au moins une dent métallique disposée sur une surface de ce moyen, la dent étant destinée à se planter dans l'aile.

5. Fixation selon l'une quelconque des revendications précédentes, dans laquelle l'organe solidaire de la caisse en blanc (14 ; 36) est un organe de fixation(18 ; 40) comprenant une tête de fixation (19 ; 41) et destiné à pénétrer dans un orifice de fixation (48) de la caisse en blanc (14 ; 36).

6. Fixation selon l'une quelconque des revendications précédentes, dans laquelle le moyen de limitation est une pièce de limitation (16 ; 38) comportant une lumière (22 ; 44) dimensionnée de façon à accueillir l'organe (18 ; 40).

7. Fixation selon une combinaison des revendication 5 et 6, comprenant des moyens d'entretoisement (24 ; 48) de la tête de fixation (19 ; 41) et de la pièce de limitation (16 ; 38), destinés à maintenir la tête de fixation (19 ; 41) et la pièce de limitation (16 ; 38) à une distance prédéterminée l'une de l'autre selon une direction normale au plan de l'orifice de fixation (46).

8. Fixation selon la revendication 7 dans laquelle les moyens d'entretoisement de la tête de fixation (19) et de la pièce de limitation (16) comprennent un épaulement (24) porté par l'organe de fixation (18), destiné à coopérer par butée avec une surface de la caisse en blanc (14).

9. Fixation selon la revendication 7, dans laquelle les moyens d'entretoisement de la tête de fixation (41) et de la pièce de limitation (38) comprennent un fût (48) destiné à être logé dans la lumière (44) de la pièce de limitation (38) et à être traversé par l'organe de fixation (40).

10. Fixation selon la revendication 9, dans laquelle le fût (40) est dimensionné pour que l'organe (40) puisse se positionner en plusieurs positions dans ce fût.

11. Fixation selon l'une des revendication 9 ou 10, dans laquelle le fût (48) est apte à coulisser relativement à la pièce de limitation (38) et comprend au moins rebord (52) coopérant par butée avec un rebord (54) de la lumière (44) de la pièce de limitation (38).

12. Fixation selon l'une quelconque des revendications 6 à 11, dans lequel la lumière (22 ;44) de la pièce de limitation (16 ; 38) est de dimension inférieure à la dimension maximale de la section de l'organe (18) dans sa direction transversale et comprend un élargissement local (58) selon cette direction, destiné à accueillir l'organe (18).

13. Fixation selon l'une quelconque des revendications précédentes, dans laquelle la course de déplacement de l'organe (18 ;40) est inférieure à 3 mm, de préférence 2 mm.

14. Procédé de fixation d'une aile (12 ; 34) à une caisse en blanc (14 ; 36) de véhicule automobile à l'aide d'une fixation glissante (10 ; 32) selon l'une quelconque des revendications 1 à 11, le procédé étant **caractérisé en ce qu'**il comprend
- une étape de réglage du moyen de limitation (16 ; 38) ;
- une étape de solidarisation du moyen de limitation (16 ; 38) à l'aile (12 ; 34).
